Europäisches Patentamt

(19) European Patent Office

Office européen des brevets

(11) Publication number: **0 011 678**
**A2**

# EUROPEAN PATENT APPLICATION

(21) Application number: **79102786.5**

(22) Date of filing: **03.08.79**

(51) Int. Cl.³: **G 03 B 17/26**
**G 03 B 19/02**

(30) Priority: **04.08.78 US 931053**
**05.04.79 GB 7911900**

(43) Date of publication of application:
**11.06.80 Bulletin 80/12**

(84) Designated Contracting States:
**AT BE CH DE FR IT NL SE**

(71) Applicant: **EASTMAN KODAK COMPANY**
**343 State Street**
**Rochester, New York 14650(US)**

(72) Inventor: **Gurdip Singh Sethi**
**Kodak Park**
**Rochester, New York(US)**

(74) Representative: **Blickle, K. Werner, Dipl.-Ing. et al,**
**KODAK AKTIENGESELLSCHAFT Postfach 369**
**D-7000 Stuttgart 60(DE)**

(54) **Photographic film cartridge assembly and still camera.**

(57) Photographic film cartridge assemblies using a disk shaped, rotatable film unit commonly include a cover member which is movable both relative to the film unit and into covering and uncovering relation with a cartridge assembly exposure window. A camera for receiving such a cartridge includes a mechanism for moving the cover member and a mechanism for indexing the film unit.

The problem of simplifying and making more reliable the connections between a still camera and such a cartridge assembly is solved by a cover member (14) which is engageable by the camera indexing mechanism (86) for exposure window (64) covering and uncovering movement and which includes engaging structure (88) cooperable with engaging structure (42) associated with the film unit (10) for rotating the film unit (10) in response to movement of the cover member (14).

The camera (100) includes an indexing mechanism (86) for moving the cover member along a path which both indexes the film unit (10) and covers and uncovers the exposure window (64).

./...

Croydon Printing Company Ltd.

FIG.1

1

## PHOTOGRAPHIC FILM CARTRIDGE ASSEMBLY AND STILL CAMERA

The present invention relates to film cartridge assemblies of the type including a disk shaped film unit rotatably mounted in a casing. It also relates to still cameras for receiving and using such cartridge assemblies.

U.S. Patent 1,410,029, to Niell, discloses a motion picture camera and a complementary film cartridge assembly which includes a disk shaped film unit. The camera has a mechanism for indexing the film unit between pictures. The cartridge assembly has a casing with opposing side walls, one of which has an exposure window. The cartridge also includes a cover member which is movable separately from the film unit to cover the exposure window when the cartridge assembly is not in the camera. The cover member is moved to an uncovering position when the cartridge assembly is in the camera in response to the movement of a latch locking the cartridge receiving chamber of the camera.

The separate cover member in the Niell structure allows exposure of an entire annulus of the film unit. It also permits removal of the cartridge assembly from the camera between pictures. However, control of the cover member requires the operator to connect the camera latch with the cover member when loading the camera. If the operator fails in connecting the cover member to the latch, the camera will index the film unit and the shutter will work, but, unknown to the operator, film will not be exposed.

The problem solved by this invention is to provide a photographic cartridge assembly generally with the advantages of the type described, but which does not require separate connections between the camera and the cartridge for indexing the film unit and for removal of the cover slide.

A complementary problem also solved by this invention is to provide a camera for such a cartridge assembly, which camera has a simplified mechanism interfacing with the cartridge.

The problem is solved by a cartridge including a cover member which is movable by the camera indexing mechanism along a path for covering and uncovering the exposure window. Engaging structure associated with the film unit and complementary engaging structure associated with the cover member rotate the film unit in response to movement of the cover member along the path. The same camera mechanism both moves the cover member to an uncovering position and indexes the film unit. Thus, the camera structure is more simple; the film loading operation is easier and more reliable.

The complementary problem is solved by providing a camera having a film unit indexing mechanism for moving the cover member along such a path.

According to a preferred embodiment, the cover member is reciprocatively rotatable between three positions including an exposure window covering position, a first uncovering position, and a second uncovering position. The film unit is indexable in a forward direction from one image area to the next image area in response to movement of the cover member in one direction between the two uncovering positions. Structure is provided to prevent the film unit from moving in a reverse direction during return movement of the cover member. With this embodiment,

0011678

the cover member does not return to a position over the exposure window of the cartridge assembly between exposures unless the cartridge assembly is to be removed from the camera. This has the substantial advantage of reducing wear to structure forming a light lock surrounding the exposure window.

Complementary to this specific preferred embodiment is a camera having a film unit indexing mechanism for moving the cover slide between these three positions. This mechanism is reciprocatable along a relatively short arc between three positions to move the cover member to an uncovering position and to index the film unit.

According to a further preferred embodiment of the camera aspect of the invention, a latch locking the cartridge receiving chamber is coupled to the camera indexing mechanism to prevent opening of the camera when the cover member is in an uncovering position.

According to a further preferred embodiment, the engaging structure is formed in plastic cartridge elements. More specifically, a ratchet pawl molded into the cover member engages a pawl receiving discontinuity in a plastic core of the film unit, the core having a separate discontinuity for each proposed image area. The cover member and core are rotatably mounted on the same axis. An additional ratchet pawl molded into other cartridge structure prevents movement of the film unit in the reverse direction. This complexity can be molded or otherwise formed into the cartridge assembly elements without substantial additional cost. Thus, the advantage in enabling and providing simplified camera mechanism is not offset by the cost of more complex cartridge assembly structure.

According to a further preferred embodiment, the film unit includes a core and a photographic film disk. The disk has predetermined image areas and a positioning discontinuity for each image area for precise positioning of the film unit for each exposure. The exposure window is made large enough to receive a positioning mechanism from the camera. This embodiment has the advantage of film unit rotation being accomplished by engagement between the cover member and the core, both relatively sturdy structures, while final film unit positioning is accomplished by engaging the more fragile film disk where tolerances are more readily maintainable and accuracy more effective. Precise positioning is effected without the need for maintenance of precise tolerances between the film disk and the core. Use of a single window for both exposure and receipt of the positioning mechanism permits use of only a single light locking structure for the two features.

Complementary to this specific embodiment of the invention, camera structure is provided for engaging the positioning discontinuity of the film disk for positioning. Means are provided for removing the engaging structure from the discontinuity prior to the next indexing. While this particular camera and cartridge feature is particularly useful in and with a cartridge of the type described, it can also be used in cartridges in which the film unit is driven directly by engagement between the camera and the core of the film unit.

According to a further preferred embodiment of the invention, there is a lock between the cover member and another portion of the cartridge assembly to prevent uncovering of the exposure window when the cartridge assembly is not in a camera. Camera structure is provided for unlocking the lock to permit the camera to move the cover member. A secondary lock between the cover member and the film unit restricts movement of the film unit until the cover member is unlocked and moved. While this particular feature has particular utility in combination with the inventive features previously described, it has broader application. For example, it is usable in a cartridge in which the film unit is driven directly by camera engagement with the core. In a preferred embodiment the secondary lock is a ratchet pawl molded into the cover member and engageable with one of the positioning discontinuities. When the cover member is moved to an uncovering position, the pawl is moved to a position behind a separator layer between the cover member and the film unit.

In the detailed description of the preferred embodiments of the invention presented below, reference is made to the accompanying drawings in which:

Fig. 1 is an exploded perspective view of an unassembled photographic cartridge assembly in accordance with the present invention;

Fig. 2 is an exploded side elevational view in section, of the photographic cartridge assembly in accordance with the present invention;

Fig. 3 is an enlarged perspective view, partially broken away, of the film unit of the cartridge assembly of Figs. 1 and 2;

Figs. 4-6 are enlarged views of details of the photographic cartridge assembly of Figs. 1 and 2;

Fig. 7 is a top plan view partially broken away of the photographic cartridge assembly of Figs. 1 and 2;

Fig. 8 is a front perspective view of a camera for use with the cartridge assembly of Figs. 1 and 2;

Fig. 9 is a back perspective view of the camera of Fig. 8 with the door open to show the cartridge assembly receiving chamber;

Fig. 10 is a fragmentary front view of the camera of Figs. 8 and 9 showing details of its film unit indexing mechanism;

Fig. 11 is a view of a portion of the camera of Figs. 8 and 9 showing details of the film disk support surface and positioning mechanism;

Fig. 12 is a fragmentary front view of an alternative embodiment of a camera according to the present invention;

Fig. 13 is a plan of a latch usable with the camera of Fig. 12;

Fig. 14 is a fragmentary front view of a further embodiment of a camera according to the present invention; and

Fig. 15 is an exploded perspective view of a film unit, separator layer and cover layer illustrating an alternative film unit locking structure for the cartridge assembly shown in Figs. 1 and 2.

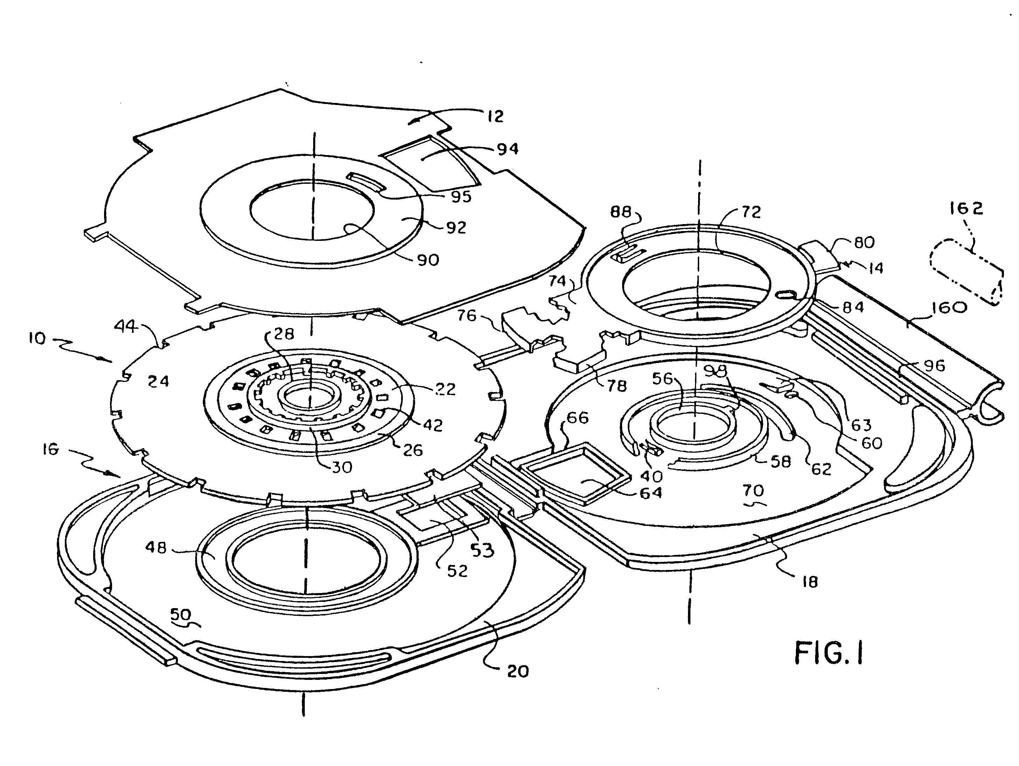

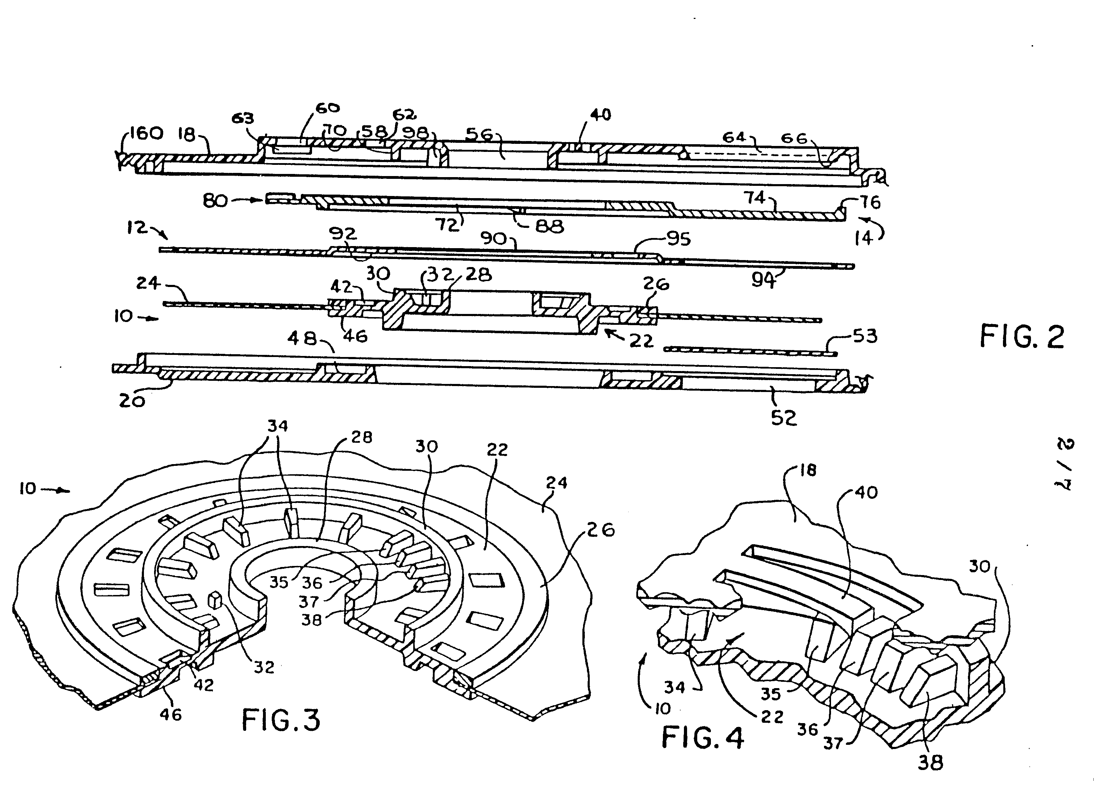

A cartridge assembly, shown in exploded perspective in Fig. 1 and in sectioned elevation in Fig. 2, includes a disk shaped film unit 10, a separator layer 12, a cover member 14, and a casing 16 with top and bottom parts 18 and 20, respectively. When assembled, the top and bottom parts 18 and 20 of the casing form walls which enclose the film unit, the separator layer and the cover member.

The film unit 10, shown enlarged and in partial section in Fig. 3, includes a rigid core 22, a photographic film disk 24, and a mounting ring 26. The film disk is illustrated as having a generally circular outer perimeter, but other non-circular (e.g. polygonal) shapes, such as hexagonal or octagonal may be used.

The film disk 24, comprises a moderately flexible but self-supporting base sheet formed of, for example, cellulose acetate or poly(ethylene terephthalate) and carries photosensitive layers on a face thereof. It is constructed to record photographic images in a plurality of image areas which are spaced along an annular exposure region concentric with the film unit axis. The image areas can be defined by surrounding borders which have been photographically pre-exposed.

The core 22 is preferably molded of a plastics material and includes an inner raised ring 28, surrounding a central opening, and an outer raised ring 30. A post 32 (Figs. 2 and 3) projects upwardly between the rings to form part of a final locking system explained hereinafter.

According to Fig. 3, a plurality of widely spaced teeth 34 and closely spaced upstanding teeth 35-38 are located radially inwardly from outer raised ring 30. These teeth cooperate with a ratchet pawl 40 (shown in Fig. 1 and detailed in Fig. 4) on the casing top part 18 in a manner disclosed hereinafter to inhibit rotation of the film unit 10 in other than one desired direction. In the illustrated embodiment, the angular spacing between the teeth 35-38 is eight degrees, while the other spaces between teeth are each twenty-four degrees.

A plurality of equally circumferentially spaced discontinuities in the form of recesses 42 are provided in the core 22 radially outwardly of the ring 30 for receiving a force tending to rotate the film unit 10. The perimeter of the film disk 24 contains a series of arcuately spaced positioning discontinuities, for example, notches 44 for use in termination of the indexing function and accurate positioning of each image area.

An annular projection 46 (Fig. 3) of the core 22 rotatably rides in a groove 48 (Fig. 1) in the casing bottom part 20. The film disk 24 projects radially outwardly from the core 22 and lies in an annular recess 50 in the casing bottom part. An opening 52 through the bottom part 20 in the region of the recess 50 is covered by an opaque flexible membrane 53 to prevent light and dirt from entering the cartridge assembly. The opening is provided so that a camera pressure pad may exert pressure, through the membrane, to push the film disk 24 against a film plane locating structure of the camera.

Referring now to the casing top part 18, an annular wall 56 extends around a central opening and a second annular wall 58 is spaced radially outwardly from wall 56. The top part includes the aforementioned ratchet pawl 40, two apertures 60 and 62, a tooth 63, an exposure window 64, a rib 66 surrounding exposure window 64, and a recess 70.

The cover member 14 has a central opening 72 sized to receive annular wall 58 of casing top part 18 so that the cover member can rotate about the axis of the annular wall which is also the axis of the film unit 10. The cover member is formed of suitably thin but relatively stiff opaque sheet plastics material and includes a generally fan-shaped leaf portion 74 sized to cover the exposure window 64. The passage of light rays through the exposure window 64 and onto photosensitive film disk 24 when the cartridge assembly is not protectively encased by a camera is precluded by means of the leaf portion 74 and the separator layer 12. Lips 76 and 78 extend over portions of rib 66 to form a light baffle and limit rotation of cover member 14.

The exposure window 64 is deliberately larger in size than the desired image area. In this way, the image area and its respective discontinuity or notch 44 is exposed and the window can receive not only a film support frame 126 (described hereinafter) of a camera but also a film discontinuity sensing member 150 (also described hereinafter). The light-tight integrity of the cartridge is, in this way, only interrupted at one location and only one light baffle arrangement is consequently required.

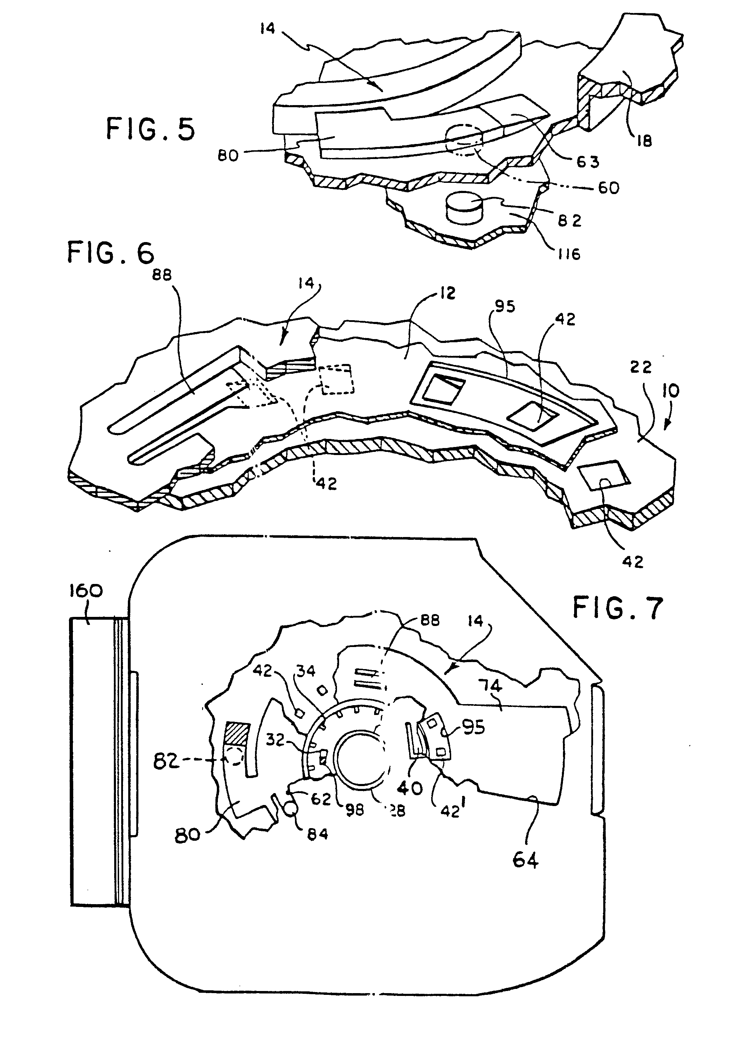

A locking mechanism for preventing inadvertent rotation of the cover member when the cartridge assembly is not in a camera includes a tab 80 (detailed in Fig. 5) on the cover member. The tab is aligned with the aperture 60 and engages the tooth 63 of the casing top part when the leaf portion 74 is aligned with the exposure window 64. The tab 80 is depressable by a camera pin 82 to disable the locking mechanism when the cartridge assembly is received in a camera.

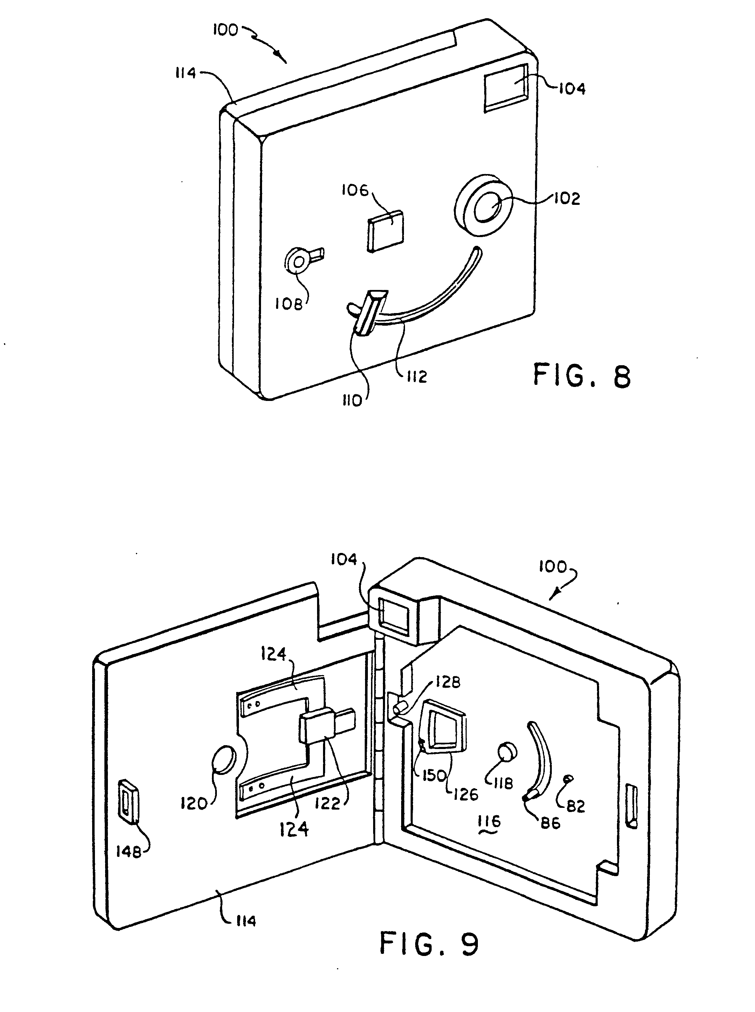

Another discontinuity, illustrated as a hole 84 in cover member 14, is aligned with the aperture 62 and is engageable by a camera indexing mechanism, for example, a pin 86 (Fig. 9) for rotating the cover member. A ratchet pawl 88 (detailed in Fig. 6) extends from the cover member 14 toward the core 22 and is aligned with the recesses 42 on the core. As explained below, the pawl 88 is an engaging structure associated with the cover member 14 which cooperates with the recesses 42, to rotate the film unit 10 in response to reciprocative rotation of the cover member 14 on a path about the annular wall 58.

The separator layer 12 is formed of an opaque sheet material and has a central aperture 90 sized to admit the outer ring 30 of the core 22 and to conform to the inside diameter of the annular wall 58 of the casing top part. A recess 92 in the separator layer 12 receives the core 22, and a window 94 is aligned with exposure window 64. An aperture 95 is aligned with recesses 42 on the core 22.

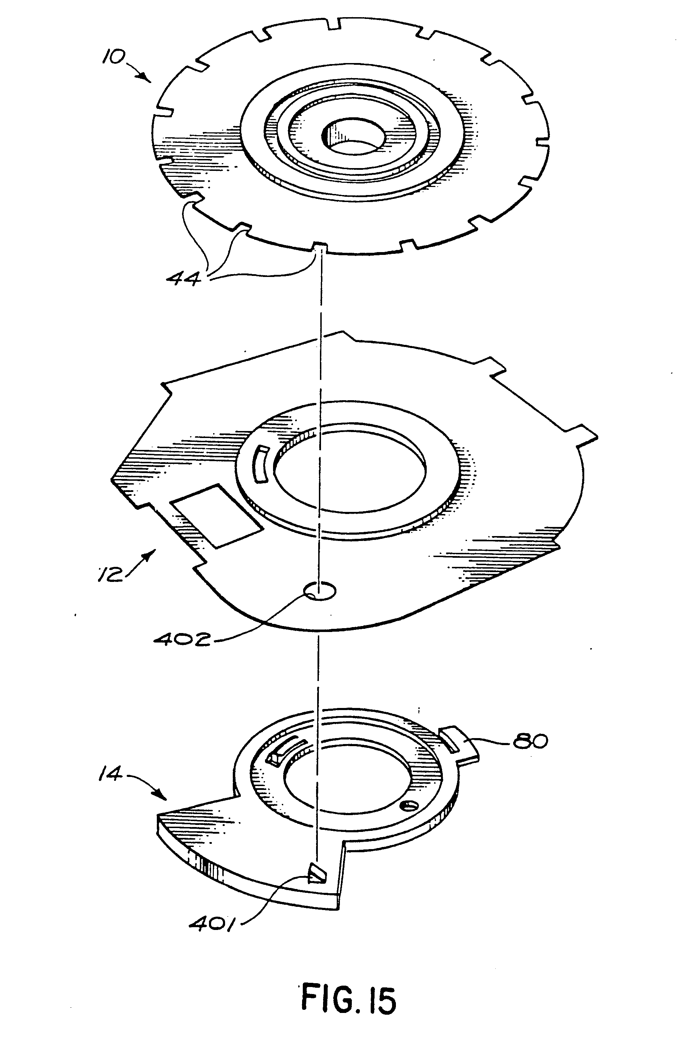

Before the cartridge assembly is loaded into a camera, cover member 14 is held against rotation in one direction in casing 16 by engagement of lip 78 and rib 66, and in the other direction by tab 80 engaging tooth 63. Rotation of film unit 10 in casing 16 is inhibited by pawl 40 on casing top part 18 lying between closely spaced teeth 35 and 36 as shown in Fig. 4 such that engagement between the pawl and tooth 36 prevents counterclockwise rotation of the film unit and engagement between the pawl and tooth 35 inhibits clockwise rotation. An alternative film unit locking structure is described with regard to Fig. 15 below.

As shown in Fig. 7, leaf portion 74 of cover member 14 is in light blocking relationship with exposure window 64 and separator layer window 94 (Fig. 1). Inasmuch as leaf portion 74 is larger than the aligned windows 64 and 94 between which it is interposed, a labyrinthine light baffling arrangement is created to restrict the access of light to film disk 24 through the windows.

The cartridge assembly is receivable in a camera such as shown schematically in Figs. 8-11 and referred to by numeral 100. The camera front (Fig. 8) has a taking lens 102, view finder 104, a shutter release button 106, a door opening tab 108, and a manually accessible film advance member 110 which extends through an arcuate slot 112 in the camera front. Camera 100 could also include an electronic flash device (not shown). The flash device could be positioned in the upper corner furthest from lens 102 to reduce the possibility of red-eye and to leave the lower two corners free for holding the camera during picture taking.

Referring to Fig. 9, the rear of the camera is shown with its door 114 open to show a cartridge receiving chamber 116. The chamber is asymmetrically shaped to ensure that the cartridge assembly can be inserted therein in only a single position, with its exposure window 64 in a predetermined orientation.

A stationary post 118 extends into the chamber 116 to extend through the central opening in the core of a received cartridge assembly. The post 118 projects into a recess 120 in the door 114. When the cartridge assembly is inserted in the chamber 116 and the door is closed, a rectangular pressure pad 122 attached to the door 114 by a pair of resilient spring arms 124 enters the opening 52 of an inserted cartridge assembly to urge the film disk 24 toward film support frame 126. As mentioned above, the film support frame 126 is received in the exposure window 64 of the  cartridge assembly so that, when the cover member is moved, the frame 126 bears on the surface of the film disk 24. As is described later  discontinuity sensing member 150 is located in the frame 126 so as to sense each notch 44 as the respective image area of the film disk is presented for exposure. During film indexing (explained hereinafter) the force of the pressure pad 122 against the film disk is at least partially relieved by a pin 128 so that the film disk is free to rotate in the casing 16. The pin 128 is moved by means (not shown) alternately to permit rotation of film disk 24 for indexing thereof and to restrict movement during picture taking.

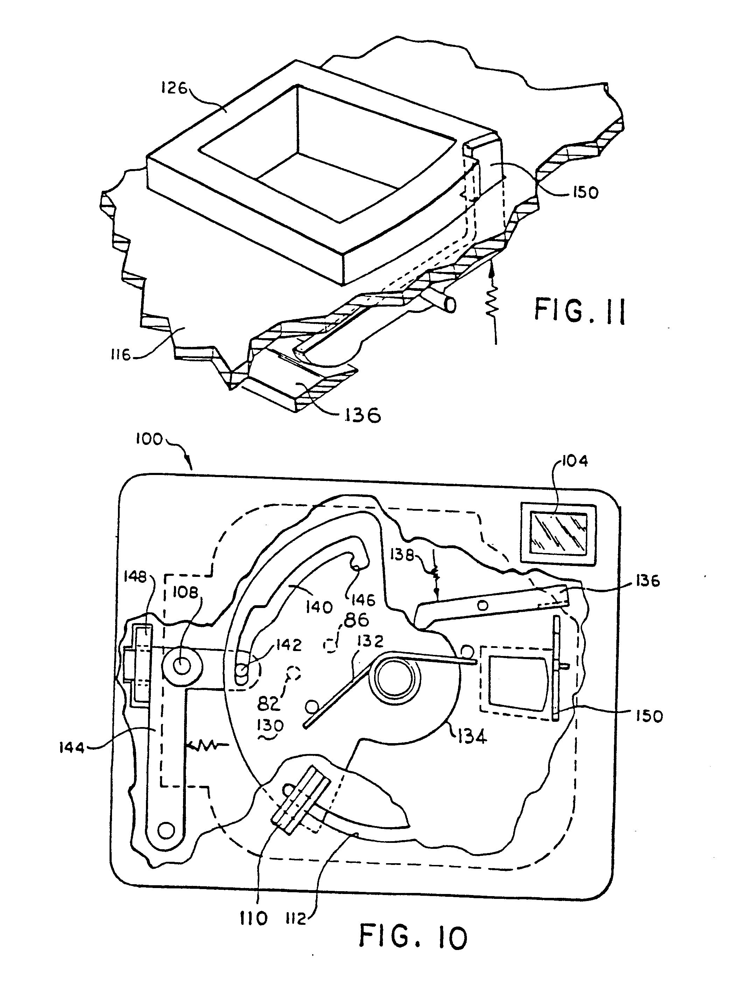

Pin 86, which is shown in Figs. 9 and 10, is mounted on a rotatable sector 130 and adapted to engage the cover member 14 by entering the hole 84 through the slot 62 in the casing top part 18. The sector 130 is biased by a spring 132 to rotate in a clockwise direction as viewed in Fig. 10. The sector

has a cam surface 134 against which a follower lever 136 is held by a spring 138. A slot 140 in the sector 130 slidably receives a pin 142 on a pivoted latch lever 144 which forms part of a latch for the door 114. Film advance member 110 is attached to sector 130 for movement therewith.

When the door 114 of the camera is open, sector 130 and the pin 86 are in respective first positions which are rotated from their Fig. 10 positions, and the pin 142 is in a trapped condition in a region 146 of the slot 140. The door latch lever 144 is in a position which is rotated from its illustrated position (Fig. 10) to clear a latch plate 148 on the door 114. The film advance member 110 is positioned at the other end of slot 112 from that shown in Figs. 8 and 10, and the pin 86 is positioned as shown in Fig. 9.

Upon insertion of a cartridge assembly into the camera 100, the camera pin 82 enters the hole 60 in the casing top part 18 and depresses the tab 80 to release the lock and free the cover member 14 for one-way rotation. Simultaneously, the camera pin 86 enters the hole 84 in the cover member through the slot 62 in the casing top part 18. After the camera door 114 has been closed, the operator manually moves the tab 108 toward its position in Fig. 8 to move the door latch lever 144 into the hole in the latch plate 148 and to withdraw the pin 142 from the region 146 of the slot 140. Thereupon, the spring 132 rotates sector 130 (and the pin 86) clockwise from its first position toward its Fig. 10 position. As the sector 130 and the pin 86 rotate, they move the cover member 14 along its operative path. The leaf portion 74 is removed from alignment with both the exposure window 64 and the separator layer window 94 so that scene light may be imaged by the camera lens 102 upon the film disk 24 when the camera's shutter (not shown) is opened.

During the initial part of the travel of the cover member 14 from its exposure window covering position (Fig. 7), the pawl 88 slides across the surface of the separator layer 12. After camera sector 130 and the pin 86 have passed a second position in which the pin 142 is at the discontinuity of the slot 140, the pawl 88 reaches the separator layer aperture 95 and bears against the core 22 in alignment with the recesses 42. When the camera sector 130 and the pin 86 have slightly more than eight degrees of rotation remaining to reach a third position, (shown in Fig. 10) the pawl 88 reaches and engages the recess 42' aligned with aperture 95. Continued rotation of the sector 130 and the pin 86 toward their third position rotates the film unit 10 within the casing 16 by the interaction of complementary engaging structures, the pawl 88 and the recesses 42. As the sector approaches its third position (Fig. 10), one of the notches 44 on the periphery of disk 24 comes into alignment with a film discontinuity sensing member, for example, the positioning pawl 150 in the film support frame 126. The pawl 150 is spring urged toward the film disk 24 and rides on the disk until reaching the notch 44. When the positioning pawl enters a notch 44, the film unit 10 continues to rotate until the trailing edge of the notch engages and is urged against the pawl to stop further film disk rotation.

Once the pawl 150 is in a notch 44, a conventional double exposure prevention mechanism (not shown) is deactivated and the camera's exposure mechanism can be activated to expose the image area of disk 24 aligned with the window 64. After an image area has been exposed, the camera film indexing mechanism can be actuated to rotate the film disk 24 to align the next succeeding image area with exposure window 64. When the operator is ready to index the film disk, the member 110 (and, therefore, the sector 130) is manually moved from its Fig. 10 position until the pin 142 reaches the discontinuity of the slot 140, inhibiting further rotation of the sector 130 in that direction.

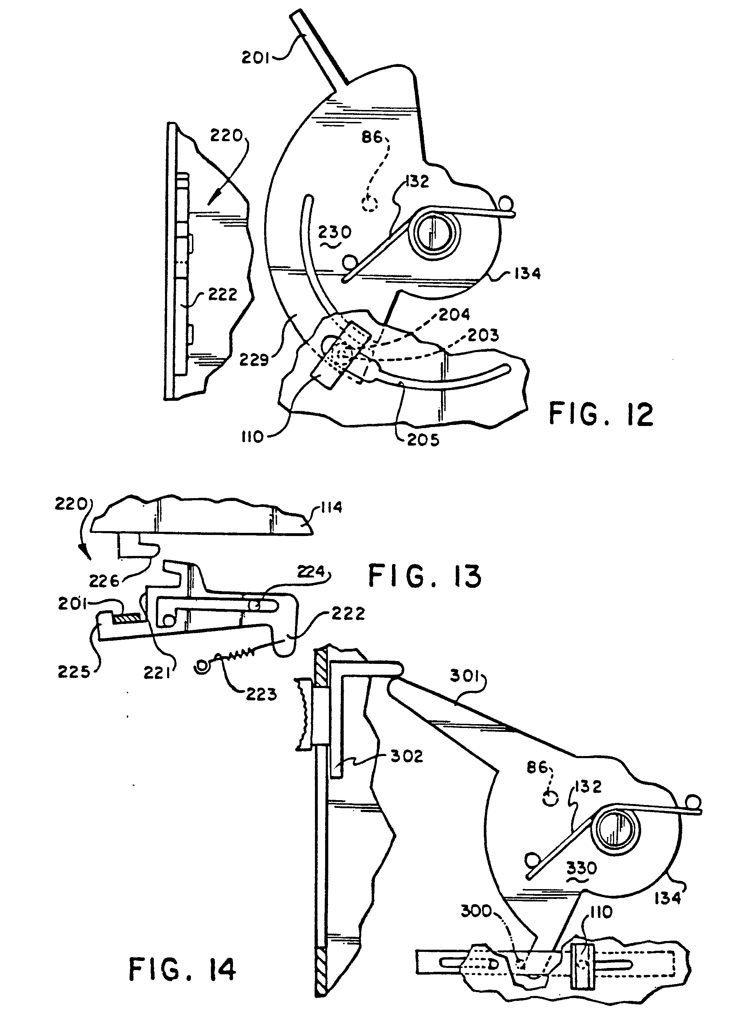

As the sector 130 rotates from its Fig. 10 position, one end of the follower lever 136 rides up the cam surface 134. The other end of the lever 136 cams the pawl 150 from the notch 44 of the film disk, as shown in Figs. 10 and 11. Also, as the sector 130 moves from its Fig. 10 position, the pin 86 moves from its third position to its second position, rotating the cover member 14. The pawl 88 rides out of both the recess 42' and the aperture 95 to again ride on the separator layer 12. Any tendency for the film unit 10 to rotate with the cover member 14 because of friction is opposed by the ratchet pawl 40 in engagement with the tooth 35. When the member 110 is released by the operator upon the sector 130 reaching its second position the sector 130 is again rotated toward its third position by the spring 132. The cover member 14 is rotated with the sector by the pin 86, and the pawl 88 picks up the next member succeeding recess 42 which is spaced twenty-four degrees from the first recess 42' and which came into alignment with aperture 95 during the preceding film indexing operation. After dropping into that next succeeding recess 42, the pawl 88 advances the film unit 10 until the second image area is aligned with the exposure window 64 and the positioning pawl 150 falls into another notch 44. Now the cartridge assembly is ready for a second exposure.

The pawl 150 may be removed from the notch by other mechanisms which operate in the picture taking and indexing cycle. For example, actuation of the shutter, the shutter release mechanism, a high energy lever or a structure associated with the pin

128 could all be used to remove the pawl 150, with the spring 132 carrying the notch 44 beyond the pawl 150 when so removed so that it will not reenter the same notch.

Note that the force of spring 132 is sufficient to rotate film unit 10, but insufficient to tear or deform the film when the notch 44 is engaged by the pawl 150. The whole mechanism stops when the notch is engaged with the spring 132 holding disk 24 tight against the pawl 150.

In another alternative embodiment the pawl 150 can be designed also to prevent reverse movement of the film unit 10 thereby eliminating the need for the pawl 40 and the teeth 34 on the cartridge assembly. The pawl 150 can then be removed at the beginning of film unit movement by an appropriate shape on the cam surface 134. Similarly, an anti-backup pawl can be molded into separator layer 12 or casing bottom part 20 to engage the positioning discontinuities at a position on the periphery of disk 24 remote from the exposure window 64.

The above-described indexing procedure is repeated with each exposure until fifteen pictures have been taken. After any one of the exposures, the operator may desire to remove the cartridge assembly temporarily from the camera to load the camera with a cartridge containing a different type of film (i.e., slide vs. print film, color vs black and white, or one A.S.A. value vs. another). To remove the cartridge without fogging the film disk, the operator begins rotating member 110 from its Figs. 8 and 10 position in a counterclockwise direction until pin 142 is at the discontinuity in slot 140. To continue rotating member 110 beyond that position, the operator must push tab 108 toward the center of the camera. Now, further rotation of member 110 rotates cover member 14 to its position wherein leaf portion 74 blocks exposure window 64.

0011678

When sector 130 has rotated to a position to align pin 142 with the end of slot 140, tab 108 may be pushed further so that pin 142 enters region 146 of the slot and door latch lever 144 clears latch plate 148. Only then can door 114 be opened. The cartridge assembly may now be removed from the camera, whereupon tab 80 abuts tooth 63 on casing top part 18 to inhibit inadvertent rotation of cover member 14 while the cartridge assembly is out of the camera.

Upon reloading the cartridge assembly into the camera, closing door 114 and moving tab 108 outwardly, sector 130 returns to its Fig. 10 position, indexing the film unit and moving leaf portion 74 out of alignment with exposure window 64. The cartridge assembly is now conditioned for exposure of the next image area.

When the last, fifteenth, image area is exposed, ratchet pawl 40 is between teeth 37 and 38. Now the operator once more rotates member 110 from its Fig. 10 position and releases it so that spring 132 can advance film. However, after film unit 10 has rotated only eight degrees, post 32 (Fig. 3) abuts against post 98 (Fig. 1) on casing top part 18 to inhibit further film movement. Now the ratchet pawl 40 is between teeth 36 and 37 to lock the film unit against rotation in one direction while posts 32 and 98 finally lock the film unit against rotation in the opposite direction.

An alternative camera structure can be used in which the cover member is driven open to advance the film directly by the operator or by an electric motor and a spring returns the cover member to its original position. With such structure, means can be provided to prevent tearing of the notch 44 by the pawl 150. For example, a positive lock on the drive can be effected in response to the pawl 150 sensing a notch 44, or a slip clutch can be inserted in the drive mechanism. Design of both such structures are well within the capability of those skilled in the art.

Other camera indexing structures are shown in Figs. 12 and 13, and in Fig. 14. In the embodiment shown in Figs. 12 and 13, the pin 86 connected to the rotatable sector 230 controls movement of the cover member as in the Fig. 10 embodiment. However, film advance member 110 is connected to a flexible arm 229 of sector 230 by a pin with a narrow neck 203 and a wide neck 204. Member 110 and sector 230 move with the pin in a slot 205 having a wide portion capable of receiving wide neck 204 and a narrow portion capable of receiving only narrow neck 203. The arm 229 has a natural resilience which urges member 110 toward a position at which wide neck 204 restricts the pin from entering the narrow portion of slot 205.

As the member 110 is moved reciprocatively over the wide portion of the slot 205, the pin 86 moves between its second and third positions and the film unit is indexed as in the Fig. 10 embodiment. To open the camera, member 110 is depressed allowing narrow neck 203 to enter the narrow portion of slot 205 and be moved by the operator to the far end remote from the wide portion. This moves the pin 86 to its first position, closes the cover member and brings an arm 201 on sector 230 into engagement with a latch 220 shown in detail in Fig. 13. Arm 201 engages a surface 221 of a latch member 222 pushing it against the urging of a spring 223 to the right until the latch member is free to rotate about a pin 224 in a clockwise direction forcing cover 114 open and trapping arm 201 on a hook 225.

When the door 114 is closed a surface 226 on the door rotates latch member 222 counterclockwise about pin 224 releasing arm 201 and permitting spring 223 to move latch member 222 to the left to latch the door. With this structure, the cover member is moved to an open position and the film unit is indexed to the first image area as a result of the act of closing the door. Further indexing, closing the cover member and unlatching of the door are accomplished by manipulation of member 110.

In the embodiment shown in Fig. 14, a sector 330 is free to move relative to the member 110 and is engaged by a pin 300 attached to the member 110 for film unit indexing only. A latch 302 for the door (not shown) is manually moved through a long path so as to unlatch the door (by means not shown), simultaneously engaging an arm 301 and rotating the sector 330 through its complete cover slide closing movement via the pin 86. The latch 302 is held in an open position by a mechanism similar to that shown in Fig. 13 until the door is shut again, which, in turn, releases the latch to be moved by the arm 301 and the spring 132 to its upward position as the pin 86 moves from its first position to its third position opening the cover member and indexing the film unit.

From the time that the cartridge assembly was first loaded into the camera to its finally locked condition, the film unit 10 has been rotated through an angle of three hundred fifty-two degrees, and is eight degrees from its initial position. The angles of rotation of eight degrees from the film unit's initial position to the first image area, twenty-four degrees between image areas, eight degrees final rotation, and eight degrees between the final and the initial positions are chosen to accommodate fifteen exposures on the disk and to ensure that the final position is different from the initial position. Of course, other angles may be chosen to permit more or less images on a film disk. To adapt a cartridge assembly for more or less exposures than that disclosed (fifteen), one would adjust the spacing between the notches 44, the recesses 42, and the teeth 34-38. The dimension of the aperture 95 would also have to be changed, all of which changes are within the capabilities of those having ordinary skill in the art.

It is within the broad concept of the embodiments of the invention shown in the drawings that the cover member could move along a path in which it is returned to an exposure window covering position each time the film disk is indexed i.e. from its third to its first position. The film disk may then be indexed in response to uncovering (or covering) movement of the cover member 14. However, the embodiment shown in the drawings in which the cover member moves along a path having three distinct positions and does not ordinarily return to a covering position between ordinary indexing operations has the substantial advantage of reducing wear on the light baffle associated with the exposure window.

With a slight modification, discontinuities 42 can be used both for advancement and for preventing reverse movement. For example, discontinuities 42 can be in the form of rectangular apertures extending through the core and engageable on one side by the advancing ratchet pawl 88 and on the other side of the core by the pawl 40. Pawl 40 may alternatively be constructed in bottom part 18 and arcuately spaced from pawl 88.

With any of the embodiments, complexity in the cartridge assembly does not generally add substantial cost, because the core, cover member and casing are all made of plastic in which pawls and discontinuities can be readily molded or otherwise formed. However, the resultant simplifying of the camera structure, especially when the camera has a manual film advance mechanism, results in fewer total parts in the camera, which does save cost.

Accuracy in positioning the film disk for sequential exposure of the image areas is important, especially when such areas have pre-exposed borders. This accuracy is enhanced by controlling image area positioning by means which utilize discontinuities in the film disk itself, for example, the notches 44 in the periphery of the film disk. The force tending to rotate the film unit for indexing is applied to the core which is a more sturdy structure than the film disk. With positioning being controlled by the film disk discontinuities, tolerances between the disk and the core are less critical.

While this feature is particularly useful with the structure described above in which the film unit is driven by the cover member, it is also usable in a cartridge in which the camera directly drives the film unit. Such a structure, not shown in the figures, includes a keyway associated with the central opening of the core. The keyway is directly accessible to a key or spline on a rotatable drive shaft in the camera (which replaces post 118 in the embodiment shown in the drawings). The force tending to rotate the film unit is applied through the shaft, key and keyway. The pawl 150 continues to control positioning using the notches 44. It can also be used to initiate indexing. For example, an exposure is made upon the initial stroke of a shutter release button. On return movement of the shutter release button, an electrical motor is energized, applying a torque to the drive shaft through a slip clutch or other tendency drive. Using a suitable timing structure, the pawl 150 is then momentarily removed from one of the notches 44 allowing the film unit to rotate. The pawl is returned into contact with the film disk to engage the next notch to stop the film unit for the next exposure. The motor can be turned off in response to movement of the pawl into the notch or other suitable timing apparatus. A resilient rotational force may-be maintained on the film unit to keep the notch edge urged against the pawl for precise positioning.

The key and keyway can be replaced by a spiral jaw clutch with the cartridge portion having fifteen steps ramped in one direction. The camera portion then is always within one frame of engaging one of the steps when the cartridge is inserted. The camera structure can be free to be moved in one direction by the ramps to a step engaging position. With such a structure accurate arcuate positioning of the camera drive is not necessary before a cartridge is inserted. To the extent it is important to accurately axially position the core, the camera portion of the clutch can be spring urged against a camera reference surface held in close tolerance with the film support frame 126.

This structure involves an efficient application of energy from an electric motor to the core of the film unit while maintaining the indexing accuracy achieved through use of the positioning discontinuities (notches). However, it requires a separate structure to engage the cover member and uncover the exposure window. When indexing is performed manually the embodiment in which indexing is performed through the cover member lends itself to more simple camera structure.

Fig. 15 shows an alternative initial locking structure for the film unit 10. Prior to insertion into a camera for the first exposure, movement in one direction is prevented by engagement between post 98 (Fig. 1) and post 32 (Fig. 3). An initial lock pawl 401 molded into cover member 14 extends through a hole 402 in separator layer 12 to engage a positioning discontinuity 44 to prevent movement in the other direction. When the tab 80 is depressed to unlock the cover member and the cover member is moved (counterclockwise as shown in Fig. 15), the pawl 401 moves out of hole 402 and is prevented from engaging discontinuity 44 by separator layer 12. Film unit 10 is now free to move in one direction.

This structure has the important advantage of providing a positive lock on the film unit which cannot be overcome, as in the Fig. 4 embodiment, by manual turning of the core when the cartridge is outside the camera. It also is totally released prior to film unit advance which reduces the torque necessary to begin rotation of the film unit. This feature also has broader application than use in cartridge assemblies in which film units are driven by the cover member. It also can be used with a cartridge assembly in which the film unit is driven directly by the camera as described above.

The casing top and bottom parts are sealed together to ensure light tightness. Separation of the top and bottom parts for removal of the film unit 10 for processing can be facilitated by incorporating fracture channels (not shown) in the casing which lead in opposite directions annularly around the periphery of the disk. Similarly, holes and a lip (not shown) can be constructed in, for example, the top part. The holes permit insertion of an opener to mate with the bottom part, while the lip is engaged by the opener. With this structure, the parts can be pryed sufficiently apart to permit insertion of a wedge which causes the casing to tear along the fracture channels.

The film cartridge assembly has been shown in the drawings with a molded battery clip 160 for receiving a cylindrical battery 162 shown in broken lines in Fig. 1. The battery may be inserted in the clip just before packaging the cartridge assembly to maximize shelf life, and may be used to power various camera mechanisms such as electronic exposure control and flash mechanisms. The clip is provided with a notched fracture line so that the user may disconnect the clip and battery from the cartridge casing before sending the cartridge assembly to the processor, or so that the processor may disconnect the clip before opening the casing. Other forms of battery clips will readily occur to those skilled in the art. For example, the clip may be provided with snap-on features and/or be shaped to receive rectangular or other shaped batteries.

The invention has been described in detail with particular reference to preferred embodiments thereof, but it will be understood that variations and modifications can be effected within the scope of the invention as defined in the appended claims.

1. Photographic cartridge assembly with a substantially light tight casing including two opposing wall portions, one wall portion having an exposure window, a disk shaped film unit situated between the opposing wall portions and rotatable to present successive image areas of the film unit to the exposure window, and a cover member reciprocatively movable along a path which includes a position in which it covers the exposure window and a position in which it uncovers the exposure window, characterized by engaging structure (88) associated with the cover member (14) and complementary engaging structure (42) associated with the film unit (10) for rotating said film unit (10) in response to movement of the cover member (14) along said path.

2. Cartridge assembly according to claim 1 characterized in that the engaging structures (88,42) are constructed to rotate said film unit only in response to movement of the cover member (14) in one direction along said path and in that means (40) are provided to inhibit rotation of said film unit (10) in a direction reverse to said one direction.

3. Cartridge assembly according to claim 2 characterized in that the engaging structures (88,42) are constructed to rotate the film unit (10) only during a portion of the movement of the cover member (14) in said one direction during which portion the exposure window (64) remains uncovered.

4. Cartridge assembly according to claim 3 characterized by a separator layer (12) between the cover member (14) and the film unit (10) for inhibiting engagement of the engaging structures (88,42) during the portion of the movement of the cover member (14) in which the exposure window (64) is being uncovered, and having an aperture (95) for permitting engagement of the engaging structures (88, 42) during the portion of the movement in which the exposure window (64) remains uncovered.

5. Cartridge assembly according to any of claims 1-4 characterized in that both the film unit (10) and the cover member are mounted for rotation about the same axis and that one engaging structure includes a ratchet pawl (88) and the other engaging structure includes complementary discontinuities (42) for receiving the ratchet pawl.

6. Cartridge assembly according to claim 5 characterized in that the ratchet pawl (88) is integrally molded into the cover member (14) and the discontinuities (42) are integrally molded into a plastic core (22) of the film unit.

7. Cartridge assembly according to claim 5 or 6 characterized in that the engaging structure (42) associated with the film unit (10) includes a separate discontinuity for each of said image areas.

8. Cartridge assembly according to claim 7 in which the image areas are disposed in an annular region of a film disk (24) portion of the film unit (10), characterized in that each separate discontinuity (44) which is adapted to receive a camera positioning pawl has the same spatial relationship with its associated image area as has each of the others.

9. Cartridge assembly according to any of claims 1-8 characterized in that said cover member (14) includes means (84) for receiving an indexing mechanism of a camera.

10. Cartridge assembly according to claim 9 characterized in that the receiving means is a hole (84) in said cover member accessible through an aperture (62) in the casing.

11. Cartridge assembly according to any of claims 1-10 characterized by an externally releasable lock (80, 63) between the cover member (14) and another portion (18) of the cartridge assembly.

12. Cartridge assembly according to any of claims 2 through 11, characterized by a final locking means (32, 98) for inhibiting rotation of the film unit (10) in said one direction after rotation of said film unit (10) through a predetermined arc.

13. Cartridge assembly according to claim 12 characterized in that said predetermined arc is less than 360 degrees.

14. Photographic cartridge assembly with a substantially light tight casing including two opposing wall portions, one wall portion having an exposure window, a film unit including a disk of photographic film situated between the opposing wall portions, said film unit being rotatable to present successive image areas of the film to the exposure window, characterized in that the film unit (10) has a rigid core (22) including engageable structure (42) for receiving a force tending to rotate the film unit and the film disk has positioning discontinuities (44) each corresponding to a respective image area for positioning such image areas at the exposure window (64) upon presentation thereto.

15. Cartridge assembly as claimed in claim 14, wherein the positioning discontinuities (44) comprise notches adjacent the periphery of the film disk (24).

16. Cartridge assembly as claimed in claim 14 or 15 wherein each positioning discontinuity (44) is located relative to its respective image area such that both are presented simultaneously at the exposure window (64).

17. Cartridge assembly as claimed in Claim 14, 15 or 16, wherein the engageable structure comprises a keyway in a central opening in the core engageable by a corresponding key on a drive shaft of a camera mechanism.

18. Photographic cartridge assembly with a substantially light tight casing including two opposing wall portions, one wall portion having an exposure window, a disk shaped film unit situated between the opposing wall portions and rotatable to present successive image areas of the film unit to the exposure window and a cover member movable along a path which includes a position in which it covers the exposure window and a position in which it uncovers the exposure window, characterized by a lock (401) preventing movement of the film unit (10) relative to the exposure window (64) when the cover member (14) is in its covering position, which lock is released in response to movement of the cover member (14) toward its uncovering position.

19. Cartridge assembly according to Claim 18 characterized in that the film unit (10) includes a disk (24) of photographic film having discontinuities (44) on its periphery and said lock is a pawl (401) carried by the cover member (14) which pawl is engageable with one of said discontinuities (44) to prevent movement of the film unit (10).

20. Cartridge assembly according to Claim 19, characterized in that the cartridge assembly includes a separator layer (12) positioned between the film unit (10) and the cover member (14) having a hole (402) through which the pawl (401) extends to engage a discontinuity (44), said pawl (401) being movable with said cover member (14) to a position out of alignment with the hole (402) in which position the pawl (401) is prevented by the separator layer (12) from engaging a discontinuity (44).

21. Cartridge assembly according to any of the preceding claims, characterized by a releasable lock (63, 80) preventing movement of the cover member (14) when said cartridge assembly is outside a camera.

22. Camera for receiving a cartridge assembly according to one of any of the preceding claims 1-13 and 18 through 21, characterized by an indexing mechanism (86, 110, 132, 130; 230; 330) for engaging the cover member and moving said cover member along said path.

23. Camera according to claim 22, characterized in that the indexing mechanism is reciprocatively movable to move the cover member in a reciprocating motion along said path.

24. Camera according to claim 22 or 23 and particularly for receiving a cartridge assembly according to claims 3 through 10, characterized in that the indexing mechanism includes means (86) for engaging the cover member of the cartridge assembly, which means is movable through three positions, a first position in which the cover member covers the cartridge assembly exposure window and second and third positions in which the exposure window is uncovered, movement between the second and third positions rotating the film unit.

25. Camera according to claim 24, characterized in that the indexing mechanism is coupled to a latch (144, 148; 220; 302) for the cartridge receiving chamber, the latch being movable to an unlatching condition only when the means (86) for engaging the cover member is in its first position.

26. Camera according to claim 24 or 25, characterized by means for restricting the cover member engaging means to move only between its second and third positions.

27. Camera according to claim 26, as appendant to claim 25, characterized in that said latch includes means (144; 302) for overcoming said restricting means to permit movement to said first position.

28.   Camera according to claim 24, characterized in that the means for engaging the cover member is a pin (86) receivable in a hole in the cover member.

29.   Camera according to claim 22, characterized by a positioning pawl (150) for engaging a positioning discontinuity as an image area becomes aligned with the exposure window by said indexing mechanism.

30.   Camera according to claim 29, characterized in that the positioning pawl (150) is spring urged toward a received film unit and that means (134, 136) responsive to a camera function are provided for withdrawing the positioning pawl from a positioning discontinuity prior to each discrete rotation of the film unit.

31.   Camera according to claim 22 and particularly for receiving a cartridge assembly according to claim 11 characterized by a release mechanism (82) for releasing the lock (80, 63) to permit movement of the cover member by the indexing mechanism.

32.   Camera according to claim 31, characterized in that the release mechanism includes a pin (82) which engages and releases the lock (80, 63) in response to insertion of the cartridge assembly in the camera.

33.   Camera for receiving a cartridge assembly according to one of claims 14-17, characterized by indexing means (86, 110, 132; 230; 330) for rotating the film unit and a positioning pawl (150) for engaging a positioning discontinuity as an image area is presented to the exposure window by said indexing mechanism.

FIG. 1

1/2

0011678

FIG. 2

FIG. 3

FIG. 4

2/7

0011678

FIG. 5

FIG. 6

FIG. 7

FIG. 8

FIG. 9

FIG. 11

FIG. 10

FIG. 12

FIG. 13

FIG. 14

0011678

FIG. 15